# EUROPÄISCHE PATENTSCHRIFT

(11) **EP 1 061 293 B1**
(45) Veröffentlichungstag und Bekanntmachung des Hinweises auf die Patenterteilung: **18.08.2004**
(21) Anmeldenummer: 00112770.3
(22) Anmeldetag: 16.06.2000
(51) Int. Cl.: F16J 3/02

(54) **Strukturausrichtung von Membranen**
Structure alignment of membrane
Alignement structurel de membranes

(30) Priorität: 17.06.1999 DE 19927576; 20.03.2000 DE 10013533
(43) Veröffentlichungstag der Anmeldung: 20.12.2000
(73) Patentinhaber: Heidrich, Helmut, D-40597 Düsseldorf (DE)
(72) Erfinder: Heidrich, Helmut, D-40597 Düsseldorf (DE)

(56) Entgegenhaltungen:
- EP-A- 0 396 755
- DE-A- 19 824 989
- US-A- 4 809 589

## Beschreibung

Die vorliegende Erfindung betrifft eine Membran mit den Merkmalen des Oberbegriffs von Anspruch 1.

Es ist bekannt, daß Flachmembranen zum Beispiel mit Wellenprofil 2 oder Rillen beim Betätigen die Materialstauchung bzw. Materialdehnung durch ihr besonderes Profil kompensieren. Ferner erfolgt, ähnlich wie bei der DE 198 24 989 A1, eine besonders gute Kompensation, wenn die Stauchung und die Dehnung in einem gleichen Winkel gleichzeitig aus radialer und tangentialer Richtung auf die schräg ausgerichtete Struktur 5 erfolgt.

Der vorliegenden Erfindung liegt die Aufgabe zugrunde, die Kompensation zu vergrößern und das Arbeitsverhalten der Membran zu verbessern.

Diese Aufgabe wird von einer Membran nach Anspruch 1 gelöst. Vorteilhafte Ausgestaltungen sind Gegenstand der Unteransprüche.

Erfindungsgemäß ist vorgesehen, daß die Vielzahl der Scheitellinien oder der Rillen mindestens in einem bestimmt langen Bereich jeweils so ausgerichtet ist, daß dabei dort in dem Verlauf der Scheitellinie der Winkel ein spitzer Winkel konstanter Größe ist, wobei die Scheitellinie oder die Rille in diesem bestimmt langen Bereich sich in einem die Scheitellinie oder die Rille umspannenden Halbkreis erstreckt, dessen Kreismittelpunkt (Mittelpunkt) mit dem Zentrum der Membran übereinstimmt und wobei der bestimmt lange Bereich mindestens ein Viertel von der im Halbkreis sich erstreckenden (ganzen ) Länge der Scheitellinie oder der Rille im kompensierenden Strukturbereich umfaßt. Der Strukturverlauf hat in dem bestimmt langen Bereich zu der Radialrichtung, dem Scheitelpunkt vom Winkel β, gradmäßig eine gleiche und bestimmte Ausrichtung. Gegenüber den bisher bekannten Strukturverläufen von Membranen ändert sich die bestimmte Gradzahl über den bestimmt langen Bereich im wesentlichen nicht, während sie beispielweise nach der DE 198 24 989 A1 mathematisch gesehen von Punkt zu Punkt unterschiedlich ist.
Bevorzugt beträgt (liegt ) eine gleichbleibende bestimmte Winkelgröße für den Winkel β 34° oder bis zu 60° bevorzugt 38° oder bis zu 52°. Je näher dabei die Winkelgröße 45° erreicht, desto besser ist die Kompensation.
Ein Ausführungsbeispiel der vorliegenden Erfindung ist in der Zeichnung dargestellt und wird im folgenden näher beschrieben.

Es zeigen:

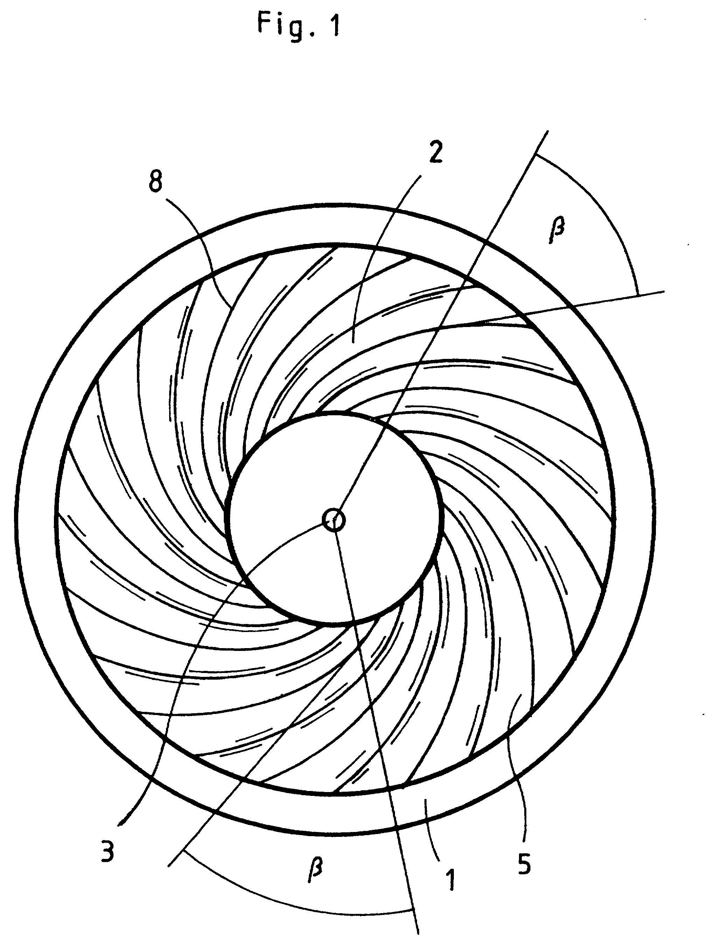

- Fig. 1:: eine Draufsicht auf eine erfindungsgemäße Membran mit fortlaufend gleichbleibendem Winkel **β** von der Scheitellinie 8 zu der Radialrichtung während des Strukturverlaufs.

In der Figur 1 ist eine erfindungsgemäße Membran in einer Draufsicht dargestellt. Die Membran weist einen äußeren Randbereich 1 auf. Daran anschließend folgt ein ringförmiger, strukturierter Bereich 5, der nach innen von dem Zentrum 3 begrenzt wird. Ferner sind die Struktur 5, die Scheitellinie 8 und der doppelte Winkel **β** vermerkt. In dem Strukturverlauf behält die Scheitellinie 8 fortwährend den Winkel **β** in seiner Größe zu der Radialrichtung vorzugsweise bei, zum Beispiel beträgt bei der Figur 1 der Winkel **β** 52°. Dadurch ist die Kompensation in den einzelnen mit Profil 2 versehenen Membranabschnitten ungefähr gleichbleibend.

Die erfindungsgemäße Membran ist dort geeignet, wo eine große Flexibilität und Kompensation, wie bei gewölbten Membranen zum Beispiel von Speichern und Pumpen gefordert wird.

Die mit der Erfindung erzielte vorteilhafte Wirkung kommt dadurch zustande, daß die Kompensation je nach Konstruktion gleichzeitig in einem bestimmt langen Bereich mit dem Winkel gleicher Gradzahl **β** von 34° oder bis zu 60° arbeiten kann. Ferner, daß die Ausrichtung der Kompensationskräfte auf den Strukturverlauf vorzugsweise gleich bleiben.

## Patentansprüche

1. Membran, deren Oberfläche mit Profil (2) versehen ist, das wellen-, falten- bzw. rillenförmige Struktur (5) mit durch Wellen, Falten bzw. Rillen gebildeten Scheitellinien (8) aufweist, wobei durch den Schnittpunkt der Radialrichtungslinie vom Mittelpunkt zum Radius der Membran mit der Tangente an der Scheitellinie (8) in diesem Schnittpunkt ein Winkel (β) definiert ist, **dadurch gekennzeichnet, daß** die Vielzahl der Scheitellinien (8) oder der Rillen mindestens in einem bestimmt langen Bereich jeweils so ausgerichtet ist, daß dabei dort in dem Verlauf der Scheitellinie (8) oder der Rille der Winkel ein spitzer Winkel (β) konstanter Größe ist, wobei die Scheitellinie (8) oder die Rille in diesem bestimmt langen Bereich sich in einem die Scheitellinie (8) oder die Rille umspannenden Halbkreis erstreckt, dessen Kreismittelpunkt mit dem Zentrum (3) der Membran übereinstimmt, und wobei der bestimmt lange Bereich mindestens ein Viertel von der im Halbkreis sich erstreckenden Länge der Scheitellinie (8) oder der Rille umfaßt.

2. Membran nach Anspruch 1, **dadurch gekennzeichnet, daß** der bestimmt lange Bereich die ganze Länge der Scheitellinie (8) oder der Rille umfaßt.

3. Membran nach mindestens einem der vorhergehenden Ansprüche, **dadurch gekennzeichnet, daß** der spitze Winkel (**β**) eine gleichbleibende bestimmte Winkelgröße hat, die 38° oder bis zu 52° beträgt.

4. Membran nach Anspruch 1 bis 2 , **dadurch gekennzeichnet, daß** der spitze Winkel (**β**) eine gleichbleibende bestimmte Winkelgröße hat, die 34° oder bis zu 60° beträgt.

5. Membran nach mindestens einem der vorhergehenden Ansprüche, **dadurch gekennzeichnet, daß** bei einem Winkel (**β**) mit 45°der Radialrichtungslinie vom Mittelpunkt zum Radius mit der Scheitellinie (8) oder der Rille mit dem selben Scheitelpunkt dabei der eine benachbarte Winkel von der Scheitellinie (8) oder der Rille zu der Umfangsrichtung gleichwohl auch 45° beträgt.

6. Membran nach mindestens einem der vorhergehenden Ansprüche, **dadurch gekennzeichnet, daß** die gleichbleibende Ausrichtung der Scheitellinie (8) oder der Rille zu der Radialrichtungslinie vom Mittelpunkt zum Radius in dem bestimmt langen Bereich während des Verlaufs der Scheitellinie (8) oder der Rille sich bis zu 3° je cm Scheitellinienlänge oder Rillenlänge verändert und dabei die Scheitellinie (8) oder die Rille in diesem bestimmt langen Bereich nur in einem ungefähr gleichbleibend großen spitzen Winkel (**β**) zu der Radialrichtungslinie verläuft.

7. Membran nach mindestens einem der vorhergehenden Ansprüche **dadurch gekennzeichnet, daß** die Struktur (5) auf der einen Membranseite gegenüber der anderen Membranseite ein gleiches, weniger stark ausgeprägtes, anderes oder eben gestaltetes Profil (2) hat.

8. Membran nach mindestens einem der vorhergehenden Ansprüche, **dadurch gekennzeichnet, daß** die Membran neben anderen Anwendungsmöglichkeiten auch für Speicher und Pumpen gestaltet ist.

## Claims

1. A membrane, the surface of which has a profile (2) with an undulating, pleated or furrowed structure (5) with apex lines (8) in the form of waves, crinkles or furrows, wherein the intersection of the radial line from the centre to the radius of the membrane with the tangent on the apex line (8) defines an angle (β) in this intersection, **characterised in that** the plurality of the apex lines (8) or the furrows is aligned at least in a section of certain length in such a way that at a point along the apex line (8) or the furrow the angle is an acute angle (β) of constant size, wherein the apex line (8) or the furrow in this section of certain length stretches across the area of a semicircle encompassing the apex line (8) or the furrow, the centre of which semicircle is the same as the centre (3) of the membrane and wherein the section of certain length comprises at least a quarter of the length of the apex line (8) or the furrow stretching across the area enclosed by the semicircle.

2. Membrane according to claim 1, **characterised in that** the section of certain length covers the entire length of the apex line (8) or the furrow.

3. Membrane according to at least one of the above claims, **characterised in that** the acute angle (β) has a certain uniform angle size of 38° or up to 52°.

4. Membrane according to claims 1 to 2, **characterised in that** the acute angle (β) has a certain uniform angle size of 34° or up to 60°.

5. Membrane according to at least one of the above claims, **characterised in that,** with an angle (β) of 45° between the radial line from the centre to the radius and the apex line (8) or the furrow with the same angular point, one neighbouring angle from the apex line (8) or the furrow to the circumferential direction also measures 45°.

6. Membrane according to at least one of the above claims, **characterised in that** the uniform alignment of the apex line (8) or the furrow to the radial line from the centre to the radius in the section of certain length changes by up to 3° per cm of apex line (8) or furrow during the course of the apex line (8) or the furrow and wherein the apex line (8) or the furrow in this section of certain length runs only in an approximately uniform acute angle (β) to the radial line.

7. Membrane according to at least one of the above claims, **characterised in that** the structure (5) on one membrane side has a similar, less pronounced, different or level profile (2) compared to the other membrane side.

8. Membrane according to at least one of the above claims, **characterised in that** the membrane is suitable for use in tanks and pumps, in addition to other uses.

## Revendications

1. Membrane dont la surface est dotée d'un profil (2) qui présente une structure (5) en forme d'ondes, de plis ou de rainures avec lignes de sommet (8) formées par les ondes, plis ou rainures, un angle (β) étant défini par le point d'intersection de la ligne en direction radiale du centre au rayon de la membrane avec la tangente à la ligne de sommet (8) dans ce point d'intersection, **caractérisée en ce que** chacune des multiples lignes de sommet (8) ou rainures est orientée, au moins dans une zone de longueur déterminée, de sorte qu'au cours de la ligne de sommet (8) ou de la rainure, l'angle soit un angle aigu (β) de grandeur constante, la ligne de sommet (8) ou la rainure s'étendant, dans cette zone de longueur déterminée, dans un demi-cercle qui embrasse la ligne de sommet (8) ou la rainure et dont le centre de cercle correspond au centre (3) de la membrane, la zone de longueur déterminé comprenant au moins un quart de la longueur de la ligne de sommet (8) ou de la rainure étant embrassée par le demi-cercle.

2. Membrane selon la revendication 1, **caractérisée en ce que** la zone de longueur déterminée comprend la longueur totale de la ligne de sommet (8) ou de la rainure.

3. Membrane selon au moins une des revendications précédentes, **caractérisée en ce que** l'angle aigu (β) a une grandeur d'angle constante déterminée s'élevant à 38° ou à jusqu'à 52°.

4. Membrane selon la revendication 1 à 2, **caractérisée en ce que** l'angle aigu (β) a une grandeur d'angle constante déterminée s'élevant à 34° ou à jusqu'à 60°.

5. Membrane selon au moins une des revendications précédentes, **caractérisée en ce que,** pour un angle (β) de 45° de la ligne en direction radiale du centre au rayon avec la ligne de sommet (8) ou la rainure avec le même sommet, l'un des angles adjacents de la ligne de sommet (8) ou de la rainure vers la direction circonférentielle s'élève tout de même également à 45°.

6. Membrane selon au moins une des revendications précédentes, **caractérisée en ce que** l'orientation constante de la ligne de sommet (8) ou de la rainure par rapport à la ligne en direction radiale du centre au rayon dans la zone de longueur déterminée au cours de la ligne de sommet (8) ou de la rainure change jusqu'à 3° par cm de longueur de la ligne de sommet ou de longueur de la rainure et qu'en même temps, la ligne de sommet (8) ou la rainure prend un angle aigu (β) de grandeur à peu prés constante seulement par rapport à la ligne en direction radiale dans cette zone de longueur déterminée.

7. Membrane selon au moins une des revendications précédentes, **caractérisée en ce que** la structure (5) sur l'une des surfaces de la membrane a un profil (2) identique, moins fortement marqué, différent ou de façon plane par rapport à l'autre surface de la membrane.

8. Membrane selon au moins une des revendications précédentes, **caractérisée en ce que** la membrane est conçue, outre d'autres applications, également pour des réservoirs et pompes.
